# EUROPEAN PATENT APPLICATION

(11) **EP 3 432 005 A1**
(43) Date of publication of application: **23.01.2019**
(21) Application number: 17766030.5
(22) Date of filing: 16.01.2017
(51) Int. Cl.: G01N 35/04, G01N 35/02

(54) **SAMPLE TRANSPORT SYSTEM**

(30) Priority: 16.03.2016 JP 2016051957
(71) Applicant: Hitachi High-Technologies Corporation, Tokyo 105-8717 (JP)
(72) Inventor: AIZAWA Noriyuki, Tokyo 105-8717 (JP); SHIMIZU Tadao, Tokyo 105-8717 (JP)
(74) Representative: Strehl Schübel-Hopf & Partner
(86) International application number: PCT/JP2017/001189
(87) International publication number: WO 2017/159022

(57) **Abstract**

Provided is a sample transport system capable of avoiding insertion of a sample into an automatic analysis device even when the inability of the automatic analysis device to carry out processing is detected after the sample is transported from a sample preprocessing system. A carrier transfer machine (103a) determines whether a sample transferred from a sample transport system unit (102) can be analyzed by an automatic analysis device (104a) based on sample information about the sample and information about whether a reagent is loaded in the automatic analysis device (104a), and, if a determination is made that the sample cannot be analyzed, moves a sample container holder to the sample transport system unit (102) without transferring a sample container to a carrier. As a result, it is possible to avoid inserting a sample into an automatic analysis device that is not capable of carrying out analysis on the sample and eliminate unnecessary operations and time.

## Description

### Technical Field

The present invention relates to a sample transport system for transporting a sample processed in a sample preprocessing system to an automatic analysis device through a sample transport system.

### Background Art

As described in PTL 1, before a sample container is carried out to a sample transport system, a sample preprocessing system determines an automatic analysis device to which the sample container is transported according to a designated condition.

Therefore, after the sample container carried out to the sample transport system is carried out to the sample transport system, the transported automatic analysis device is not changed. In the sample transport system, one sample container is transported to a carrier transfer machine in the sample transport system by one holder, and the sample container is transferred from one holder to five sample container carrier by the carrier transfer machine. In addition, the sample container transferred to five sample container carrier is transported to the automatic analysis device and the sample contained in the sample container is analyzed.

The reason why the sample container is transferred to the five sample container carrier by the carrier transfer machine is that the sample is transported to the automatic analysis device by transporting the sample on which an analysis of the same kind is performed by the five containers, thereby improving the efficiency of the analysis.

When a state in which analysis processing is impossible occurs with respect to the automatic analysis device, in the technique described in PTL 1, dispensing processing of a sample to the detection container mounted on the sample container carrier is not executed in the sample preprocessing system but the sample is temporarily stored in a sample storage unit. When the automatic analysis device is able to perform analysis processing, the sample temporarily stored in the sample storage unit is transported to the dispensing unit and the sample preprocessing is performed.

### Citation List

### Patent Literature

PTL 1: Japanese Patent No. 5560280

### Summary of Invention

### Technical Problem

Incidentally, in a sample transport system, after a sample container is transported from a sample preprocessing system to a carrier transfer machine by the sample transport system, the sample container waits until five containers are transferred by the carrier transfer machine. Meanwhile, an automatic analysis device continues the analysis operation, for example, necessary reagents are insufficient, the sample is transported to the carrier transfer machine, and a state in which the sample transferred to the five carriers is not able to be analyzed by the automatic analysis device occurs.

In the technique described in PTL 1, when processing impossibility state of the automatic analysis device is detected before the preprocessing of the sample, the transport of the sample to the automatic analysis device by the transport system is avoided, but when the processing impossibility state of the automatic analysis device is detected after the sample is carried out to the transport system, since the sample is inserted into the automatic analysis device, it is impossible to avoid the insertion of the sample that is not able to be examined by the automatic analysis device.

When the sample that is not able to be examined is inserted into the automatic analysis device, the sample is evacuated without the analysis or returned to the sample transport system and sent to another automatic analysis device. Therefore, an analysis processing delay corresponding to the time until re-examination occurs.

An object of the present invention is to realize a sample transport system capable of avoiding insertion of a sample into an automatic analysis device even when processing impossibility of the automatic analysis device is detected after a sample is transported from a sample preprocessing system.

### Solution to Problem

In order to achieve the above-described object, the present invention is configured as follows.

A sample transport system includes a transport path through which a sample is transported, an automatic analysis device that includes a data transmission and reception unit for transmitting automatic analysis device state information and analyzes the sample, and a transfer machine that includes a data transmission and reception unit for receiving the automatic analysis device state information from the automatic analysis device, receives the sample from the transport path, and inserts the sample into the automatic analysis device. The transfer machine inserts the sample into the automatic analysis device according to a determination whether or not to insert the received sample into the automatic analysis device based on the automatic analysis device state information received from the automatic analysis device.

### Advantageous Effects of Invention

According to the present invention, it is possible to realize a sample transport system capable of avoiding insertion of a sample into an automatic analysis device even when processing impossibility of the automatic analysis device is detected after a sample is transported from a sample preprocessing system.

### Brief Description of Drawings

Fig. 1 is a schematic configuration diagram of a sample transport system to which the present invention is applied.
Fig. 2 is a configuration explanation diagram of a communication circuit between the sample transport system and an automatic analysis device according to an embodiment 1 of the present invention.
Fig. 3 is a flowchart of determining whether or not to transfer a sample container of a carrier transfer machine in the embodiment 1 of the present invention.
Fig. 4 is a schematic configuration diagram of the sample transport system by an embodiment 5 of the present invention.

### Description of Embodiments

Hereinafter, embodiments of the present invention will be described with reference to the accompanying drawings.

### (Embodiment 1)

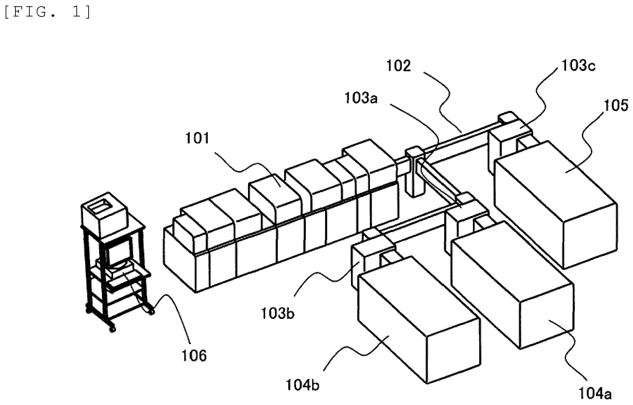

Fig. 1 is a schematic configuration diagram of a sample transport system to which the present invention is applied.

In Fig. 1, the sample transport system includes an operation console unit 106, a sample preprocessing unit 101, a sample transport system unit 102, and at least one carrier transfer machine 103 (103a, 103b, and 103c), and transports a sample from each of carrier transfer machines 103 to automatic analysis devices 104 (104a and 104b) and 105.

The sample preprocessing unit 101 centrifugally separates blood in a parent sample and dispenses the sample into a sample container, and prepares to transport the sample container to the automatic analysis devices 104a, 104b, and 105.

In addition, the sample preprocessing unit 101 includes a sample storage module that is able to temporarily store the sample container.

A sample container holder holds one sample container, and in the sample preprocessing unit 101, the sample container holder holds one sample container and moves, and the above-described processing is performed. The carrier transfer machines 103a to 103c transfer one sample container held in the sample container holder to a sample container carrier holding five sample containers and insert into the automatic analysis devices 104 (104a and 104b) and 105, the sample container holder holding one sample container transported from the sample preprocessing unit 101 to the sample transport system unit 102 is transported to one of the carrier transfer machines 103a to 103c and is carried to one of the carrier transfer machines 103a to 103c, and only sample container is transferred to a sample container carrier on which five sample containers are able to be mounted. The sample container carrier, on which five sample containers are able to be mounted, to which the sample container is transferred is transported to a corresponding automatic analysis device among the automatic analysis devices 104a, 104b, 104c, and 105.

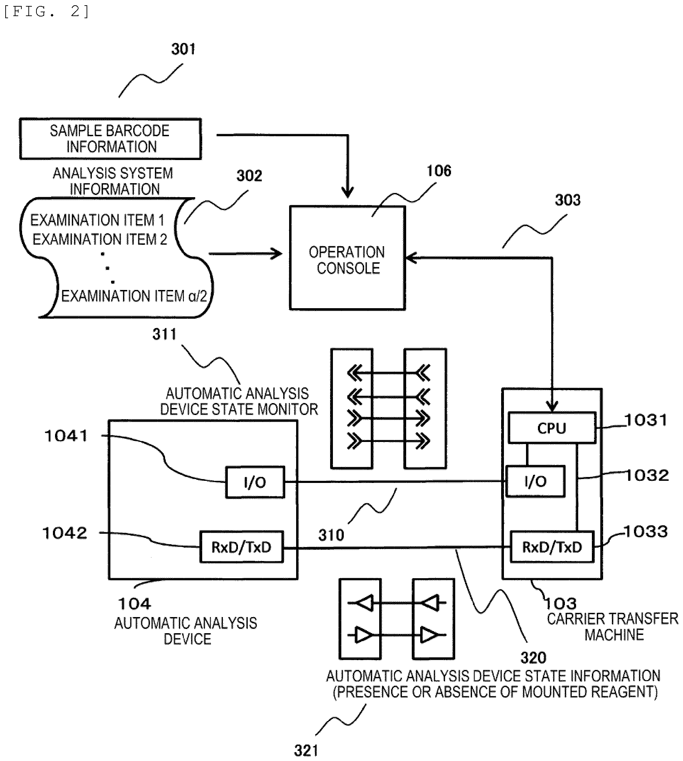

Fig. 2 is a configuration explanation diagram of a communication circuit between the sample transport system and the automatic analysis device according to the embodiment 1 of the present invention.

In Fig. 2, sample barcode information 301 and each pieces of automatic analysis device information 302 are registered in the operation console 106 in advance. In addition, the carrier transfer machines 103 (103a, 103b, and 103c) include a control unit 1031, an input and output unit 1032, and a data transmission and reception unit 1033. In addition, the automatic analysis devices (104a, 104b, and 105) include an input and output unit 1041 and a data transmission and reception unit 1042.

The carrier transfer machines 103 (103a, 103b, and 103c) are able to obtain a status (general information such as whether or not the sample may be inserted into the corresponding automatic analysis device) of an automatic analysis device state monitor 311 regarding the automatic analysis devices (104a, 104b, and 105) by the input and output units 1032 and 1041 through an I/O communication cable 310.

In addition, the carrier transfer machines 103 (103a, 103b, and 103c) obtain automatic analysis device state information 321 indicating information such as the presence or absence of a reagent mounted on the automatic analysis devices (104a, 104b, and 105) through a serial communication cable 320. The automatic analysis device state information 321 indicates the presence or absence of the mounted reagent.

The sample container carried in the sample preprocessing unit 101 passes through the sample transport system unit 102 and is transported to the carrier transfer machines 103 (103a, 103b, and 103c) . The carrier transfer machine 103a will be described as an example. When the information of the sample container carried to the carrier transfer machine 103a is checked, it is requested that the automatic analysis device 104a transmits the information on the presence or absence of the reagent mounted on the automatic analysis device 104a. The automatic analysis device 104a requested for the information on the presence or absence of the mounted reagent notifies the carrier transfer machine 103a of the information such as the presence or absence of the reagent mounted on the automatic analysis device 104a by the automatic analysis device state information 321.

The carrier transfer machine 103a is able to perform information communication with the operation console unit 106 through the Ethernet (registered trademark) communication 303. The carrier transfer machine 103a acquires information in which an examination possibility item is determined based on the information on the presence or absence of the reagent mounted on the automatic analysis device 104a in advance, and determines whether or not the reagent is able to be analyzed by the automatic analysis device 104a. When the reagent is able to be analyzed by the automatic analysis device 104a, the one sample container held in the sample container holder is transferred to the sample container carrier on which five sample containers are able to be mounted.

When the automatic analysis device 104a is not able to perform the analysis, the carrier transfer machine 103a does not transfer the sample container from the sample container holder to the sample container carrier on which five sample containers are able to be mounted and returns the sample container holder to the sample transport system unit 102. The sample container holder returned to the sample transport system unit 102 is transported to the storage module of the sample processing unit 101 by the sample transport system unit 102.

The carrier transfer machine 103a and the automatic analysis device 104a have been described as examples, but the carrier transfer machine 103b and the automatic analysis device 104b, and the carrier transfer machine 103c and the automatic analysis device 105 also perform communication with each other by each combination similarly to the carrier transfer machine 103a and the automatic analysis device 104a.

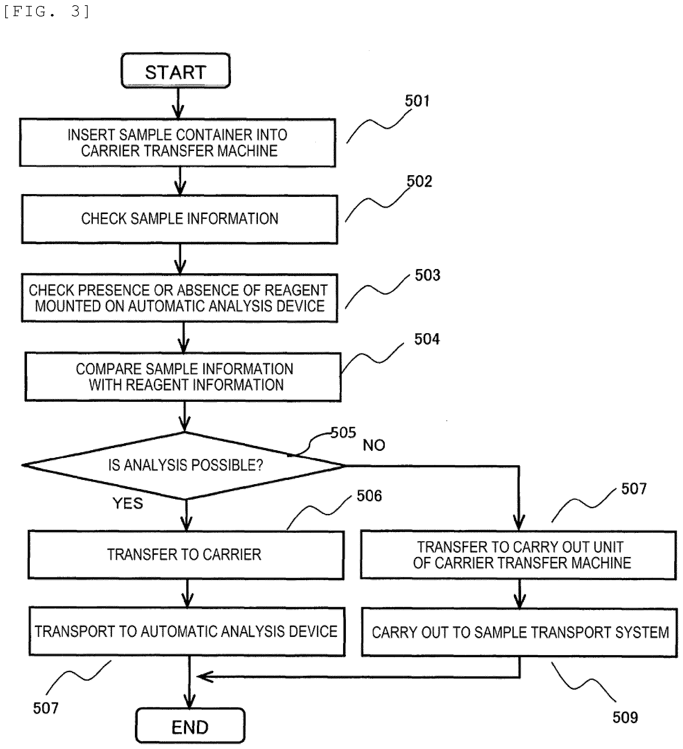

Fig. 3 is a flowchart of determining whether or not to transfer the sample container of the carrier transfer machine in the embodiment 1 of the present invention.

The carrier transfer machine 103a and the automatic analysis device 104a will be described as an example.

In step 501 of Fig. 3, the one sample container held in the sample container holder is inserted into the carrier transfer machine 103a from the sample transport system unit 102. Next, in step 502, the carrier transfer machine 103a checks the information on the inserted sample to the operation console unit 106 through the Ethernet (registered trademark) communication 303.

Next, in step 503, the carrier transfer machine 103a checks the presence or absence of the reagent mounted on the automatic analysis device 104a. In addition, in step 504, the carrier transfer machine 103a compares the sample information checked in step 502 with the information on the presence or absence of the mounted reagent checked in step 503.

Next, in step 505, it is determined whether or not the sample inserted into the carrier transfer machine 103a is able to be analyzed by the automatic analysis device 104a. That is, it is determined whether or not the reagent for analyzing the sample inserted into the carrier transfer machine 103a is present in the automatic analysis device 104. In step 505, when it is determined that the analysis is possible, the processing proceeds to step 506, and the carrier transfer machine 103a transfers (delivers) the sample container to the sample container carrier on which five sample containers are able to be mounted. In addition, in step 507, the sample container carrier to which the sample container is transferred is inserted into (transported to) the automatic analysis device 104a.

In step 505, when the carrier transfer machine 103a determines that the sample is not able to be analyzed by the automatic analysis device 104a, the processing proceeds to steps 508 and 509, and the carrier transfer machine 103a does not transfer the sample container to the sample container carrier and carries out the holder that holds the sample container in which the sample is stored to the sample transport system unit 102. The holder carried out to the sample transport system unit 102 is stored in the storage module of the sample processing unit 101.

As described above, according to the embodiment 1 of the present invention, the carrier transfer machines 103 (103a, 103b, and 103c) determines whether or not the sample is able to be analyzed by the automatic analysis devices (104a, 104b, and 105) from the sample information of the sample transported from the sample transport system unit 102 and the information on the presence or absence of the reagent mounted on the automatic analysis devices (104a, 104b, and 105), and when it is determined that the analysis is impossible, the carrier transfer machines 103 (103a, 103b, and 103c) do not transfer the sample container to the sample container carrier and carry the sample container holder out to the sample transport system unit 102.

Therefore, it is possible to avoid the insertion of the sample into the automatic analysis device that is not able to perform the analysis and cause the sample inserted into the automatic analysis device to be evacuated. Alternatively, it is possible to avoid the situation in which the sample container carrier is retrieved from the automatic analysis device and the sample container is required to be transferred from the retrieved sample container carrier to the sample container holder and transported to the sample transport system, and it is possible to omit unnecessary operation and time.

Therefore, it is possible to shorten time until the sample that is determined as the sample that is not able to be analyzed by the automatic analysis device thereof is analyzed again and it is possible to avoid a delay in the analysis process.

### (Embodiment 2)

Next, the embodiment 2 of the present invention will be described. Since the schematic configuration of the sample transport system in the embodiment 2 is similar to that of the embodiment 1, illustration and detailed description thereof will be omitted.

The difference between the embodiment 1 and the embodiment 2 is a criterion for determining whether or not to insert the sample into the automatic analysis devices (104a, 104b, and 105).

In the embodiment 1, it is determined whether or not to insert the sample into the automatic analysis device by the presence or absence of the reagent necessary for analyzing the sample in the automatic analysis device (104a, 104b, and 105). However, in the embodiment 2, it is determined whether or not to insert the sample into the automatic analysis device by whether or not the analysis item for analyzing the sample is able to be executed by the automatic analysis device.

Even when the reagent for analyzing the sample is present in the automatic analysis device, for example, there may be a case where an abnormality occurs in a reagent dispensing mechanism and the analysis item is not able to be executed.

The embodiment 2 is an example in which it is possible to handle even such a case.

Since the embodiment 1 and the embodiment 2 are common except for the criterion for determining whether or not to insert the sample into the automatic analysis device (104a, 104b, and 105), other detailed descriptions will be omitted.

However, the automatic analysis device information 321 includes possibility/impossibility information of the analysis item (information on the analysis item that is able to be executed by the automatic analysis device) . In addition, in Fig. 3, step 503 is "check of the possibility or impossibility information of the analysis item of the automatic analysis device" and step 504 is "comparison between the sample information with the possibility or impossibility information of the analysis item".

Also in the embodiment 2, in addition to obtaining the same effect as the embodiment 1, as described above, when the reagent for analyzing the sample is present in the automatic analysis device and the analysis item is not able to be executed, it is possible to handle the case.

### (Embodiment 3)

Next, the embodiment 3 of the present invention will be described. Since the schematic configuration of the sample transport system in the embodiment 3 is similar to that of the embodiment 1, illustration and detailed description thereof will be omitted.

The difference between the embodiment 1 and the embodiment 3 is a criterion for determining whether or not to insert the sample into the automatic analysis device (104a, 104b, and 105).

In the embodiment 3, it is determined whether or not to insert the sample into the automatic analysis device by the number of the possible analyses of the analysis items in the automatic analysis device.

The carrier transfer machine 103 (103a, 103b, and 103c) transfers the sample container to the sample container carrier that stores five sample containers and inserts five sample containers into the automatic analysis device. Even when the reagent is present in the automatic analysis device and the analysis item is also executable, it is possible to analyze the sample when the number of the sample containers is less than five. However, there may be a case where it is impossible to analyze the sample of five sample containers.

The embodiment 3 is an example in which it is possible to handle even such a case.

Since the embodiment 1 and the embodiment 3 are common except for the criterion for determining whether or not to insert the sample into the automatic analysis device (104a, 104b, and 105), other detailed descriptions will be omitted.

However, the automatic analysis device information 321 includes information on the number of the possible analyses of the analysis items. In addition, in Fig. 3, step 503 is "check of the number of the possible analyses of the analysis items of the automatic analysis device" and step 504 is "comparison between the number of the possible analyses of the analysis items with the number of scheduled analyses" .

Also in the embodiment 3, in addition to obtaining the same effect as the embodiment 1, as described above, when the reagent for analyzing the sample is present in the automatic analysis device and the number of the possible analyses of the analysis items is less than five, it is possible to handle the case.

### (Embodiment 4)

Next, the embodiment 4 of the present invention will be described. Since the schematic configuration of the sample transport system in the embodiment 4 is similar to that of the embodiment 1, illustration and detailed description thereof will be omitted.

The difference between the embodiment 1 and the embodiment 4 is that the determination whether or not to insert the sample into the automatic analysis device (104a, 104b, and 105) is performed by the operation console unit 106 rather than the carrier transfer machine 103 (103a, 103b, and 103c).

Hereinafter, the embodiment 4 will be described. The automatic analysis device 104a and the carrier transfer machine 103a will be described as an example.

Power sources are supplied to the operation console unit 106, the sample preprocessing unit 101, and the sample transport system unit 102, and then a power source is supplied to the automatic analysis device 104a. The supply sequence of the power source may be reversed. When the carrier transfer machine 103a checks by the automatic analysis device state monitor 311 that the carrier transfer machine 103a and the automatic analysis device 104a are in an operation state after the supply of the power source, the carrier transfer machine 103a requests for all pieces of the information on the presence or absence of the reagent mounted on the automatic analysis device 104a to the automatic analysis device 104a by the automatic analysis device information 321.

The automatic analysis device 104a requested for all pieces of the information on the presence or absence of the mounted reagent notifies the carrier transfer machine 103(a) of all pieces of the information on the presence or absence of the reagent mounted on the automatic analysis device 104a by the automatic analysis device information 321.

In addition, after checking by the automatic analysis device state monitor 311 that the carrier transfer machine 103a and the automatic analysis device 104a are in the operation state, even though there is no request from the carrier transfer machine 103a, the automatic analysis device 104a may notify the carrier transfer machine 103a of all pieces of the information on the presence or absence of the reagent mounted on the automatic analysis device 104a by the automatic analysis device information 321.

The carrier transfer machine 103a notifies the operation console 106 of all pieces of the information on the presence or absence of the reagent mounted on the automatic analysis device 104a by the Ethernet (registered trademark) 303. Therefore, the operation console unit 106 grasps all pieces of the information on the presence or absence of the reagent mounted on the automatic analysis device 104a.

The operation console unit 106 compares the sample information of the sample transported to the carrier transfer machine 103a with all pieces of the information on the presence or absence of the reagent mounted on the automatic analysis device 104a and determines whether or not the automatic analysis device 104a is able to perform the analysis. The operation console unit 106 notifies the carrier transfer machine 103a of a determination result.

According to the determination result notified from the operation console unit 106, the carrier transfer machine 103a transfers the sample container to the carrier and inserts the sample container into the automatic analysis device 104a, or does not transfer the sample container to the sample container carrier and carries the sample container out to the sample transport system unit 102.

When the reagent used in the automatic analysis device 104a is absent, all pieces of the information on the presence or absence of the reagent mounted on the automatic analysis device 104a is notified to the carrier transfer machine 103a by the automatic analysis device information 321 at the timing of the absence. The carrier transfer machine 103a transmits the all pieces of the information on the presence or absence of the reagent mounted on the automatic analysis device 104a to the operation console unit 106 and acquires information in which an item that is able to be newly examined is determined.

In addition, the timing at which the automatic analysis device 104a notifies the carrier transfer machine 103a may be configured to periodically perform the notification within one second. By the configuration described above, it is possible to prevent information error or delay caused by the communication abnormality.

In addition, the information notified when the reagent used in the automatic analysis device 104a is absent may be information on only the absent mounted reagent.

Also in the embodiment 4, in addition to obtaining the same effect as the embodiment 1, the operation console unit 106 compares the sample information with all pieces of the information on the presence or absence of the reagent mounted on the automatic analysis device 104a and determines whether or not it is possible to be analyzed by the automatic analysis device 104a. Therefore, it is possible to simplify the processing in the carrier transfer machine 103a and it is possible to perform the determination processing in a short time.

In addition, in the sample preprocessing unit 101, it is possible to deliberately distribute the sample to the automatic analysis devices 104a to 104c and 105 in a planned manner.

### (Embodiment 5)

Next, the embodiment 5 of the present invention will be described.

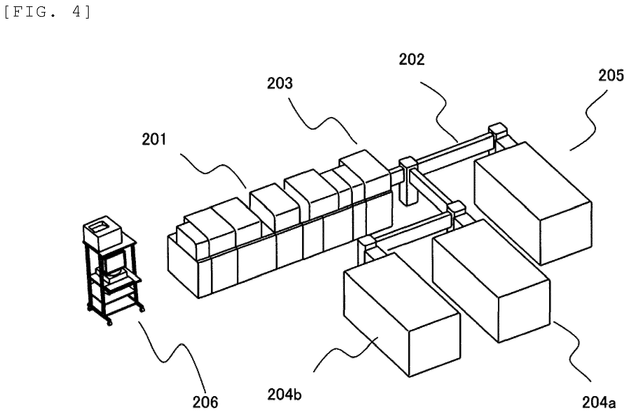

Fig. 4 is a schematic configuration diagram of the sample transport system by the embodiment 5 of the present invention.

In Fig. 4, the sample transport system includes an operation console unit 206, a sample preprocessing unit 201, and a sample transport system unit 202, and the sample preprocessing unit 201 includes a carrier transfer machine 203 at a connection portion with the sample transport system unit 202 and transports the sample to one or a plurality of automatic analysis devices 204a, 204b, and 205.

The difference between the embodiment 1 and the embodiment 5 is the point that the carrier transfer machine 203 is common to the automatic analysis devices 204a, 204b, and 205 in the embodiment 5. The carrier transfer machine 203 is able to obtain the information on the presence or absence of the mounted reagent from each of the automatic analysis devices 204a, 204b, and 205, and the like.

As described above, the sample may be transferred from one carrier transfer machine 203 to one or the plurality of automatic analysis devices 204a, 204b, and 205.

Since any of the embodiments 1 to 4 is able to be applied to the data processing and the like of the carrier transfer machine 203, a detailed description thereof will be omitted.

In addition, as a modification example of the embodiment 5, as illustrated in Fig. 1, there is a configuration in which a plurality of carrier transfer machines are provided and the plurality of automatic analysis devices are connected to any or all of the plurality of carrier transfer machines.

Also in the embodiment 5 of the present invention, it is possible to obtain effects similar to those of the embodiments 1 to 4.

As described above, according to the present invention, it is possible to realize the sample transport system capable of avoiding insertion of the sample into the automatic analysis device even when the processing impossibility of the automatic analysis device is detected after the sample is transported from the sample preprocessing system.

In addition, in the embodiments described above, when the information communication between the automatic analysis device and the carrier transfer machine is performed by the serial communication, the presence or absence of the mounted reagent and the possibility/impossibility of the analysis item are able to be performed by a bit communication method, and the number of the possible analyses of the analysis items is able to be performed by a bite communication method.

In addition, the sample container carrier described above is an example that is able to hold the five sample containers, but is not limited to the five sample containers, and is also able to be applied to an example in which the sample container carrier is able to hold a plurality of sample containers such as two, three, or four sample containers.

### Reference Signs List

101, 201: sample preprocessing system unit
102, 202: sample transport system unit
103, 103a, 103b, 103c, 203: carrier transfer machine
104, 104a, 104b, 105, 204a, 204b, 205: automatic analysis device
106, 206: operation console unit
301: sample barcode information
302: automatic analysis device information
310: I/O communication cable
320: serial communication cable
311: automatic analysis device state monitor
321: automatic analysis device information
1031: control unit
1032, 1041: input and output unit
1033, 1042: data transmission and reception unit

## Claims

1. A sample transport system comprising:
a transport path through which a sample is transported;
an automatic analysis device that includes a data transmission and reception unit for transmitting automatic analysis device state information and analyzes the sample; and
a transfer machine that includes a data transmission and reception unit for receiving the automatic analysis device state information from the automatic analysis device, receives the sample from the transport path, and inserts the sample into the automatic analysis device, wherein
the transfer machine inserts the sample into the automatic analysis device according to a determination whether or not to insert the received sample into the automatic analysis device based on the automatic analysis device state information received from the automatic analysis device.

2. The sample transport system according to claim 1, wherein
the automatic analysis device state information received from the automatic analysis device by the transfer machine is information on presence or absence of a reagent mounted on the automatic analysis device.

3. The sample transport system according to claim 1, wherein
the automatic analysis device state information received from the automatic analysis device by the transfer machine is information on an analysis item executable by the automatic analysis device.

4. The sample transport system according to claim 1, wherein
the automatic analysis device state information received from the automatic analysis device by the transfer machine is information on the number of items that are able to be analyzed by the automatic analysis device.

5. The sample transport system according to claim 1, further comprising:
an operation console that performs information communication with the transfer machine, wherein
the transfer machine notifies the operation console of the automatic analysis device state information received from the automatic analysis device, and the operation console notifies the transfer machine of a determination of whether or not to insert the sample received by the transfer machine into the automatic analysis device based on the automatic analysis device state information notified from the transfer machine.

6. The sample transport system according to any one of claims 1 to 5, wherein
a plurality of the automatic analysis devices are provided, and the transfer machine is disposed with respect to each of the plurality of automatic analysis devices.

7. The sample transport system according to any one of claims 1 to 5, wherein
a plurality of the automatic analysis devices are provided, and the transfer machine is one that is common to the plurality of automatic analysis devices.

8. The sample transport system according to any one of claims 1 to 5, wherein
the sample is contained in one sample container, the one sample container is held by a sample container holder and is transported to the transfer machine by the transport path, and when the transfer machine that receives the sample container that is held in the transported sample container holder determines to insert the received sample into the automatic analysis device, the transfer machine transfers the sample container held in the sample container holder to a sample container carrier that is able to hold a plurality of sample containers and inserts the sample container into the automatic analysis device.
